# FASCICULE DE BREVET EUROPEEN

(11) **EP 2 834 150 B1**
(45) Date de publication et mention de la délivrance du brevet: **04.05.2016**
(21) Numéro de dépôt: 13719973.3
(22) Date de dépôt: 03.04.2013
(51) Int. Cl.: B64D 45/02, B64G 1/58, F42B 15/34, F42B 3/18, F42C 19/04

(54) **DISPOSITIF DE PROTECTION CONTRE LA FOUDRE**
BLITZSCHUTZVORRICHTUNG
DEVICE PROVIDING PROTECTION AGAINST LIGHTNING

(30) Priorité: 06.04.2012 FR 1201041
(43) Date de publication de la demande: 11.02.2015
(73) Titulaire: HERAKLES, 33185 Le Haillan (FR)
(72) Inventeur: SOULIGNAC, Thierry, F-33520 Bruges (FR); BOMBLED, Florine, F-33700 Merignac (FR); ISSAC, François. M., F-31290 Villenouvelle (FR); SIERRA, Guillaume, F-31450 Baziege (FR); DESVERGNES, Philippe, P., F-33160 St Aubin De Medoc (FR); CAILLER, Aurélien, F-33300 Bordeaux (FR)
(74) Mandataire: Desormiere, Pierre-Louis
(86) Numéro de dépôt international: PCT/FR2013/050732
(87) Numéro de publication internationale: WO 2013/150241

(56) Documents cités:
- EP-A1- 0 790 182
- FR-A1- 2 875 215
- GB-A- 2 295 594
- US-A1- 2010 263 898
- US-A1- 2011 073 710

## Description

### Arrière-plan de l'invention

La présente invention se rapporte au domaine des protections contre la foudre destinées à être utilisées dans des environnements haute température. Un domaine particulier mais non exclusif de la présente invention est celui de la protection contre la foudre des parties chaudes présentes dans les propulseurs pour lanceurs spatiaux, tactiques, etc. ou dans les moteurs aéronautiques.

En effet, les propulseurs équipant ce type de lanceurs ou les pièces d'arrière-corps de moteurs aéronautiques sont susceptibles de se faire foudroyer durant le vol. Lorsque la ou les parties foudroyées sont en un matériau non conducteur tel qu'un matériau composite ou lorsque celles-ci sont recouvertes d'un matériau diélectrique, leur structure peut être gravement endommagée par les composantes impulsionnelles et continues de l'arc électrique créé par la foudre.

Il existe actuellement plusieurs techniques de protection contre la foudre dont les objectifs principaux sont de privilégier la circulation du courant de foudre dans la protection plutôt que dans la structure à protéger et d'augmenter rapidement la taille du pied d'arc de foudre de façon à réduire les contraintes thermiques et mécaniques.

Parmi les solutions existantes, on trouve des revêtements de protection contre la foudre qui sont constitués de :
- tissus métalliques fixés sur la surface de la pièce à protéger,
- grilles métalliques déployée à partir d'une feuille de métal munies de fentes et étirée pour former une grille également fixée sur la surface de la pièce à protéger,
- couches conductrices réalisées par dépôts de particules métalliques, par exemple des particules de nickel, sur la surface de la pièce à protéger afin d'augmenter la conductivité de cette dernière,
- fibres métalliques directement tissées dans la texture fibreuse du renfort de la pièce en matériau composite à protéger afin de former une multitude de petites pointes en surface de la pièce aptes à disperser le pied d'arc de foudre.

Cependant, ces différents revêtements présentent certains inconvénients dont le principal est d'avoir une faible tenue en température. En outre, certains de ces revêtements sont difficiles à mettre en oeuvre sur des structures à géométrie complexe. Le document US20011/073710, qui est considéré l'état de la technique plus proche, montre un revêtement connu.

### Objet et résumé de l'invention

La présente invention a, par conséquent, pour but de proposer une solution pour protéger contre la foudre des structures non conductrices ou recouvertes d'un diélectrique, et ce de façon fiable en environnement haute température.

A cet effet, l'invention propose un dispositif de protection contre la foudre destiné à être posé sur une structure à protéger et comprenant au moins :
- un revêtement de surface comprenant au moins une couche de peinture conductrice,
- une pluralité d'éléments électriquement conducteurs disposés de manière espacée sur la structure à protéger, soit directement sur cette dernière, soit sur la couche de peinture conductrice du revêtement de surface, lesdits éléments étant en contact avec la couche de peinture conductrice,
- un revêtement de protection disposé sur le revêtement de surface et comprenant un matériau thermiquement isolant et électriquement conducteur, le revêtement de protection recouvrant partiellement les éléments électriquement conducteurs.

On dispose ainsi d'une protection efficace contre l'agression foudre, en particulier en raison de l'utilisation d'éléments électriquement conducteurs aptes à évacuer rapidement une quantité importante de courant lors d'un foudroiement et à amplifier localement le champ électromagnétique de manière à favoriser l'apparition d'un arc électrique au niveau du dispositif de protection et protéger ainsi la structure sous-jacente.

En outre, grâce à la présence du revêtement de protection thermiquement isolant, l'intégrité du dispositif de protection de l'invention est préservée même lorsqu'il est utilisé sur des structures exposées à des flux thermiques importants. Le revêtement de protection étant également électriquement conducteur, il contribue à l'efficacité électrique globale du dispositif en assurant une continuité électrique entre les éléments électriquement conducteurs et la peinture conductrice.

Par ailleurs, de par sa conception, le dispositif peut s'adapter à tout type de géométries même complexes.

Selon un premier aspect du dispositif de l'invention, les éléments électriquement conducteurs comprennent des bandes métalliques comportant au moins une arête dépassant du revêtement de protection. La présence d'au moins une arête exposée à l'extérieur du revêtement permet de créer un effet de pointe et de favoriser la création d'un arc électrique au niveau des éléments du dispositif de protection et non de la structure à protéger. A cet effet, les bandes métalliques peuvent présenter notamment une section triangulaire, rectangulaire ou carrée.

Selon un deuxième aspect du dispositif de l'invention, au moins une partie des éléments électriquement conducteurs sont reliés entre eux de manière à augmenter la capacité d'évacuation du courant du dispositif de protection contre la foudre. Les éléments électriquement conducteurs peuvent être reliés entre eux par tout type de conducteurs électriques tel que des fils, des tresses métalliques ou un revêtement conducteur.

L'invention concerne également une structure sensible à la foudre destinée à fonctionner dans des environnements haute température, caractérisée en ce qu'au moins une partie de ladite structure est munie d'un dispositif de protection contre la foudre selon l'invention. La structure correspond notamment à une tuyère, un arrière-corps ou une virole de propulseur.

L'invention a également pour objet un procédé de réalisation d'un dispositif de protection contre la foudre sur une structure à protéger, ledit procédé comprenant au moins :
- le dépôt sur la structure à protéger d'un revêtement de surface comprenant au moins une couche de peinture conductrice,
- la fixation, sur la couche de peinture conductrice du revêtement de surface ou directement sur la structure avant la formation dudit revêtement de surface, d'une pluralité d'éléments électriquement conducteurs espacés les uns des autres,
- le dépôt d'un revêtement de protection sur le revêtement de surface comprenant un matériau thermiquement isolant et électriquement conducteur, le revêtement de protection recouvrant partiellement les éléments électriquement conducteurs.

Selon un premier aspect du procédé de l'invention, le procédé comprend la fixation, par exemple par collage ou maintien mécanique, de bandes métalliques directement sur la structure ou sur la couche de peinture conductrice de manière à former les éléments électriquement conducteurs, les bandes métalliques comportant au moins une arête dépassant du revêtement de protection.

Selon un deuxième aspect du procédé de l'invention, les bandes métalliques présentent une section triangulaire, rectangulaire ou carrée.

Selon un troisième aspect de l'invention, le procédé comprend en outre la connexion d'au moins une partie des éléments électriquement conducteurs entre eux.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est un organigramme des étapes d'un procédé de fabrication d'un dispositif de protection contre la foudre de l'invention illustré dans les figures 2A à 2F,
- les figures 2A à 2F sont des vues schématiques d'un procédé de fabrication d'un dispositif de protection contre la foudre conformément à un mode de réalisation de l'invention,
- la figure 3 est un organigramme des étapes d'un procédé de fabrication d'un dispositif de protection contre la foudre de l'invention illustré dans les figures 4A à 4E,
- les figures 4A à 4E sont des vues schématiques d'un procédé de fabrication d'un dispositif de protection contre la foudre conformément à un autre mode de réalisation de l'invention

### Description détaillée de modes de réalisation

Le dispositif de protection contre la foudre de l'invention est de préférence, mais non exclusivement, destiné à être utilisé sur toute structure réalisée en un matériau non conducteur électrique ou recouverte sur sa ou ses surfaces à protéger d'un matériau ou couche d'isolation électrique, comme c'est le cas par exemple des revêtements de protection thermique utilisés dans les lanceurs, la structure étant en outre destinée à être utilisée dans des environnements haute température.

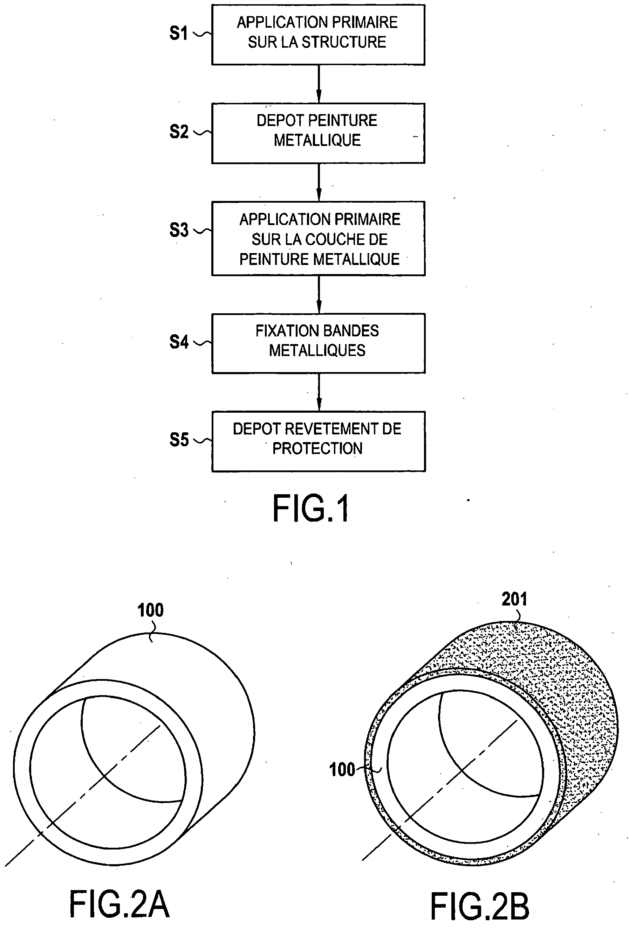

Un procédé de fabrication d'un dispositif de protection contre la foudre conforme à un mode de réalisation de l'invention est décrit en relation avec les figures 1 et 2A à 2F.

La figure 2A représente une pièce axisymétrique 100 correspondant à une structure à protéger contre la foudre. La pièce 100 peut être réalisée en un matériau composite thermostructural non conducteur électrique correspondant, par exemple, à un sous-ensemble de moteur-fusée ou de moteur aéronautique exposé aux fortes températures générées par les gaz chauds issus du moteur.

Par exemple, la pièce 100 est réalisée en matériau composite carbure de silicium/carbure de silicium (SiC/SiC) qui, de façon connue, est un matériau formé d'un renfort en fibres de SiC densifié par une matrice SiC. Les matériaux composites thermostructuraux, comme le matériau SiC/SiC, sont caractérisés par leurs propriétés mécaniques élevées qui les rendent aptes à constituer des pièces de structure et par leur capacité à conserver ces propriétés mécaniques à des températures élevées.

La pièce 100, dont la surface externe constituée d'un matériau non conducteur de l'électricité, est susceptible d'être foudroyée. En cas de foudroiement de la pièce ou de l'ensemble dans laquelle la pièce est intégrée, l'arc électrique ainsi formé peut conduire à la détérioration ou à la destruction de la pièce (effets directs ou indirects). Il en est de même pour les revêtements diélectriques présents à la surface de structures à protéger.

A cet effet et conformément à un mode de réalisation de l'invention, un dispositif de protection contre la foudre apte à résister aux températures élevées est formé sur la surface extérieure de la pièce 100 qui correspond ici à la partie de la pièce 100 à protéger contre la foudre.

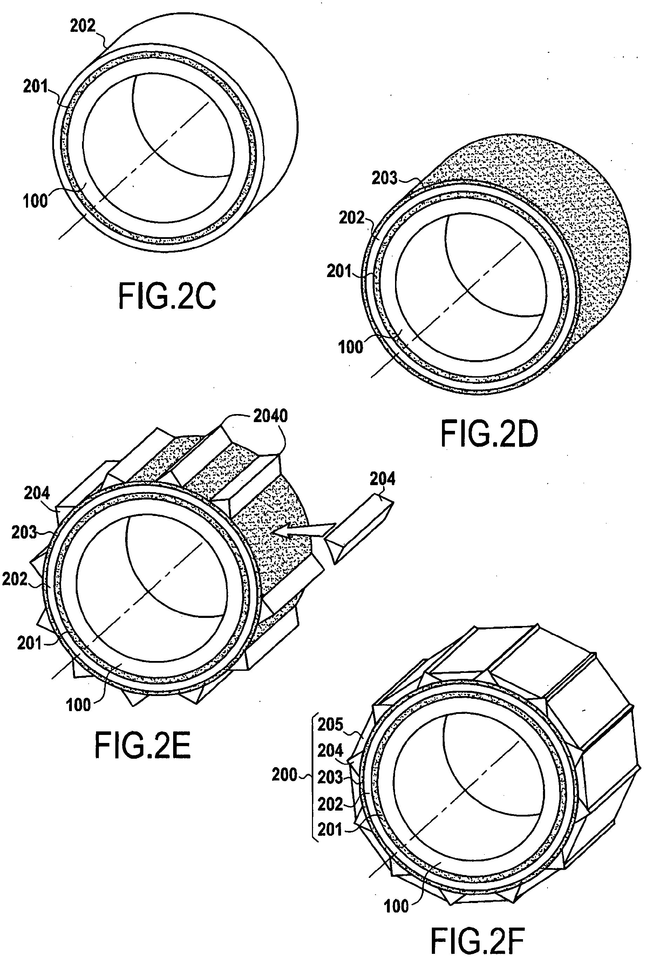

La réalisation du dispositif de protection débute par le dépôt d'une couche de peinture métallique ou électro-conductrice 202 sur la surface extérieure de la pièce 100 à protéger (étape S2, figure 2C). Dans l'exemple décrit ici, une couche d'un primaire 201, par exemple un primaire époxy, est préalablement déposée sur la surface de la pièce 100 afin de favoriser l'adhésion de la peinture conductrice (étape S1, figure 2B). Toutefois, lorsque la pièce à protéger présente un état de surface compatible avec l'accrochage d'une peinture métallique, le dépôt préalable d'un primaire n'est pas nécessaire et la peinture métallique peut être directement déposée sur la surface de la pièce.

La peinture conductrice, et le primaire éventuel, peuvent être déposés par pulvérisation pneumatique ou par dépose manuelle. La peinture conductrice peut être constituée d'une résine acrylique dans laquelle ont été incorporés des pigments à base de particules métalliques, comme, par exemple, des particules d'argent, d'aluminium, de cuivre, etc. La peinture peut être éventuellement diluée dans un solvant avant application. En outre, plusieurs couches de peinture conductrice peuvent être déposées consécutivement afin d'obtenir l'épaisseur de couche désirée et, par conséquent, la valeur de conductivité surfacique visée.

La réalisation du dispositif de protection se poursuit par la pose d'éléments électriquement conducteurs sur la peinture métallique (étape S4, figure 2E). Les éléments électriquement conducteurs sont constitués dans l'exemple décrit ici par des bandes métalliques 204, par exemple en aluminium ou en cuivre, présentant une section triangulaire formant une arête 2040 s'étendant vers l'extérieur.

Dans l'exemple décrit ici, les bandes métalliques 204 sont collées sur la couche de peinture métallique 202 avec une colle conductrice thermique comme, par exemple, un élastomère silicone mono-composant. A cet effet, une couche d'un primaire 203, par exemple un primaire époxy chargé de particules électro-conductrices, est préalablement déposée sur la couche de peinture métallique 202 afin de favoriser l'adhésion des bandes métalliques 204 (étape S3, figure 2D).

Afin de créer un effet de pointe permettant de favoriser l'attraction de la foudre, les éléments électriquement conducteurs utilisés dans le dispositif de protection contre la foudre comportent de préférence au moins une arête orientée vers l'extérieur du dispositif lorsque lesdits éléments sont fixés sur la peinture métallique. Ainsi, la section des bandes peut être différente d'une section triangulaire. Les éléments électriquement conducteurs peuvent, par exemple, être aussi constitués de bandes métalliques présentant une section carrée ou triangulaire.

Dans le mode de réalisation présenté ici, les bandes métalliques 204 sont collées sur la couche de peinture métallique 202 via la couche de primaire 203. Toutefois, des moyens de fixation mécanique peuvent être également utilisés pour maintenir les bandes métalliques. Des colliers de serrage préalablement collés sur la couche de primaire peuvent notamment être utilisés ou tout autre système de fixation mécanique des bandes métalliques.

Le courant présent dans une bande métallique peut être transmis au moins en partie aux autres bandes métalliques par la couche de peinture conductrice, ce qui permet d'évacuer plus facilement le courant accumuler dans une ou plusieurs bandes métalliques. Selon les besoins, la capacité d'évacuation de courant du dispositif de protection peut être encore accrue en connectant directement tout ou partie des bandes métalliques entre elles avec des éléments conducteurs tels que des fils ou tresses métalliques.

Une fois les bandes métalliques 204 fixées sur la couche de primaire 203, on dépose un revêtement de protection 205 à la fois sur le revêtement de surface présent entre les bandes métalliques, ici la couche de primaire 203, et sur une partie des bandes métalliques 204 (étape S5, figure 2F). L'épaisseur du revêtement de protection déposé est inférieure à la hauteur des bandes métalliques 204 de manière à ce que l'arête 2040 ne soit pas recouverte par le revêtement de protection 205 et joue pleinement son rôle vis-à-vis de l'effet de pointe.

Le revêtement de protection 205 est à la fois thermiquement isolant pour protéger la peinture métallique des flux thermiques environnants et électriquement conducteur pour favoriser la conduction électrique entre les bandes métalliques et la peinture métallique. Le revêtement de protection 205 présente de préférence une conductivité thermique inférieure à 0,1 W.m-1.K-1 et une résistivité de surface inférieure à 200 ohms par carré. Le revêtement de protection 205 peut être constitué d'une résine silicone chargée de particules électro-conductrices comme des particules d'argent. Le revêtement de protection est déposé par pulvérisation. Il peut être déposé en plusieurs couches successives afin d'obtenir l'épaisseur désirée et, par conséquent, la conductivité surfacique visée. Les arêtes 2040 des bandes 204 peuvent être préalablement recouvertes d'une protection amovible afin d'empêcher le dépôt du revêtement de protection sur ces dernières lors de sa pulvérisation.

Tel que représenté sur la figure 2F, on obtient alors, à la surface 100a de la pièce 100, un dispositif de protection 200 comprenant :
- un revêtement de surface constitué ici d'un premier primaire 201, d'une couche de peinture métallique 202 et d'un deuxième primaire 203,
- une pluralité de bandes métalliques 204 en contact avec la couche de peinture métallique 202 via le deuxième primaire 203, et
- un revêtement de protection 205 présent entre les bandes métallique et recouvrant partiellement ces dernières.

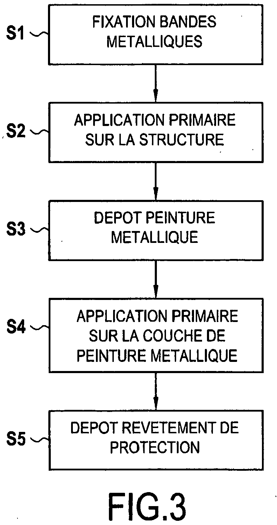

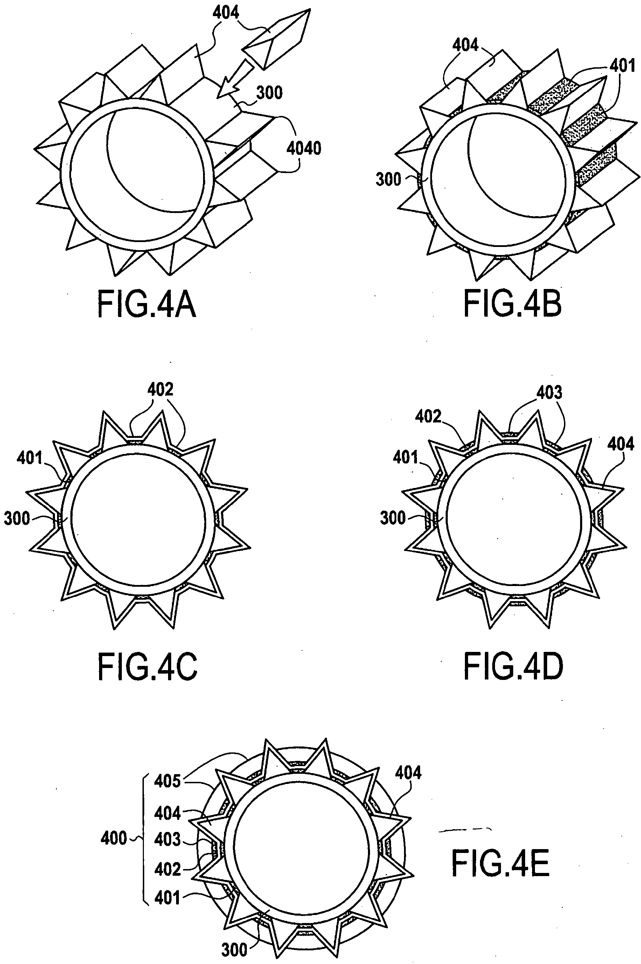

Les figures 3 et 4A à 4E décrivent un autre mode de réalisation d'un dispositif contre la foudre de l'invention qui diffère du dispositif de protection 200 décrit ci-avant en ce que les bandes métalliques sont fixées directement sur la surface de la structure à protéger et recouvertes ensuite de peinture métallique.

Plus précisément, la réalisation du dispositif de protection débute par la pose d'éléments électriquement conducteurs, ici des bandes métalliques 404 de section triangulaire formant une arête 4040 orientée vers l'extérieur, sur la structure 300 à protéger contre la foudre (étape S1, figure 4A). Les bandes métalliques 404 peuvent être collées sur la structure 300 et/ou maintenues à l'aide de moyens mécaniques (colliers, vis, etc.).

Une couche de peinture métallique ou électro-conductrice 402 est déposée sur la surface extérieure de la structure 300 à protéger (étape S3, figure 4C). Dans l'exemple décrit ici, une couche d'un primaire 401, par exemple un primaire époxy, est préalablement déposée sur la surface de la structure 300 afin de favoriser l'adhésion de la peinture conductrice (étape S2, figure 4B). Toutefois, lorsque la pièce à protéger présente un état de surface compatible avec l'accrochage d'une peinture métallique, le dépôt préalable d'un primaire n'est pas nécessaire et la peinture métallique peut être directement déposée sur la surface de la pièce.

Dans l'exemple décrit ici, la couche de peinture métallique 402 recouvre les bandes métalliques 404. Toutefois, les bandes métalliques peuvent être provisoirement protégées lors du dépôt de la couche de peinture métallique afin de ne pas recouvrir ces dernières.

La réalisation du dispositif de protection se poursuit par le dépôt d'un revêtement de protection 405 à la fois sur le revêtement de surface présent entre les bandes métalliques, ici la couche de primaire 401, et sur une partie des bandes métalliques 404 (étape S5, figure 4E). L'épaisseur du revêtement de protection déposé est inférieure à la hauteur des bandes métalliques 404 de manière à ce que l'arête de chaque bande dépasse du revêtement de protection 405 et joue pleinement son rôle vis-à-vis de l'effet de pointe. Dans l'exemple décrit ici, une couche de primaire 403 est préalablement déposée sur la peinture métallique présente entre les bandes 404 (étape S4, figure 4D).

Le revêtement de protection 405 est à la fois thermiquement isolant pour protéger la peinture métallique des flux thermiques environnants et électriquement conducteur pour favoriser la conduction électrique entre les bandes métalliques et la peinture métallique. Le revêtement de protection 205 présente de préférence une conductivité thermique inférieure à 0,1 W.m-1.K-1 et une résistivité de surface inférieure à 200 ohms par carré. Le revêtement de protection peut être constitué d'une résine silicone chargée de particules électro-conductrices comme des particules d'argent. Le revêtement de protection est déposé par pulvérisation. Il peut être déposé en plusieurs couches successives afin d'obtenir l'épaisseur désirée et, par conséquent, la conductivité surfacique visée. Les arêtes 4040 des bandes 404 peuvent être préalablement recouvertes d'une protection amovible afin d'empêcher le dépôt du revêtement de protection sur ces dernières lors de sa pulvérisation.

Tel que représenté sur la figure 4E, on obtient alors, à la surface externe de la pièce 300, un dispositif de protection 400 comprenant :
- une pluralité de bandes métalliques 404 en contact avec la structure 300,
- un revêtement de surface constitué ici d'un premier primaire 401, d'une couche de peinture métallique 402 et d'un deuxième primaire 403, et
- un revêtement de protection 405 présent entre les bandes métallique et recouvrant partiellement ces dernières.

## Revendications

1. Dispositif de protection contre la foudre (200) destiné à être posé sur une structure (100) à protéger, ledit dispositif comprenant au moins :
- un revêtement de surface comprenant au moins une couche de peinture conductrice (202),
- une pluralité d'éléments électriquement conducteurs (204) disposés de manière espacée sur la structure, lesdits éléments étant en contact avec la couche de peinture conductrice (202),
- un revêtement de protection (205) disposé sur le revêtement de surface et comprenant un matériau thermiquement isolant et électriquement conducteur, le revêtement de protection (205) recouvrant partiellement les éléments électriquement conducteurs (204).

2. Dispositif selon la revendication 1, **caractérisé en ce que** les éléments électriquement conducteurs (204) comprennent des bandes métalliques comportant au moins une arête (2040) dépassant du revêtement de protection.

3. Dispositif selon la revendication 2, **caractérisé en ce que** les bandes métalliques présentent une section triangulaire.

4. Dispositif selon l'une quelconques des revendications 1 à 3, **caractérisé en ce que** au moins une partie des éléments électriquement conducteurs (204) sont reliés entre eux.

5. Structure (100) sensible à la foudre destinée à fonctionner dans des environnements haute température, **caractérisée en ce qu'**au moins une partie de ladite structure est munie d'un dispositif de protection contre la foudre (200) selon l'une quelconque des revendications 1 à 4.

6. Structure selon la revendication 5 **caractérisée en ce qu'**elle constitue au moins un des éléments de propulseur suivants : une tuyère, un arrière-corps et une virole.

7. Procédé de réalisation d'un dispositif de protection contre la foudre (200) sur une structure à protéger (100), ledit procédé comprenant au moins :
- le dépôt sur la structure à protéger d'un revêtement de surface comprenant au moins une couche de peinture conductrice (202),
- la fixation sur la couche de peinture conductrice (202) du revêtement de surface d'une pluralité d'éléments électriquement conducteurs (204) espacés les uns des autres,
- le dépôt d'un revêtement de protection (205) sur le revêtement de surface comprenant un matériau thermiquement isolant et électriquement conducteur, le revêtement de protection (205) recouvrant partiellement les éléments éléctriquement conducteurs (204).

8. Procédé de réalisation d'un dispositif de protection contre la foudre (400) sur une structure à protéger (300), ledit procédé comprenant au moins :
- la fixation sur la structure (300) d'une pluralité d'éléments électriquement conducteurs (404) espacés les uns des autres,
- le dépôt sur la structure à protéger d'un revêtement de surface comprenant au moins une couche de peinture conductrice (402),
- le dépôt d'un revêtement de protection (405) sur le revêtement de surface comprenant un matériau thermiquement isolant et électriquement conducteur, le revêtement de protection (405) recouvrant partiellement les éléments électriquement conducteurs (404).

9. Procédé selon la revendication 7 ou 8, **caractérisé en ce qu'**il comprend la fixation de bandes métalliques sur la couche de peinture conductrice (202) ou sur la structure (300) de manière à former lesdits éléments électriquement conducteurs (204 ; 404), les bandes métalliques comportant au moins une arête (2040, 4040) s'étendant au-dessus du revêtement de protection (205 ; 405).

10. Procédé selon la revendication 9, **caractérisé en ce que** les bandes métalliques présentent une section triangulaire.

11. Procédé selon l'une quelconques des revendications 7 à 10, caractérisé en ce qull comprend en outre la connexion d'au moins une partie des éléments électriquement conducteurs (204 ; 404) entre eux.

## Patentansprüche

1. Blitzschutzvorrichtung (200), die dazu bestimmt ist, auf eine zu schützende Struktur (100) aufgesetzt zu werden, wobei die Vorrichtung wenigstens umfasst:
- eine Oberflächenbeschichtung, die wenigstens eine leitende Farbschicht (202) umfasst,
- eine Vielzahl von elektrisch leitenden Elementen (204), die an der Struktur beabstandet angeordnet sind, wobei die Elemente mit der leitenden Farbschicht (202) in Kontakt sind,
- eine Schutzbeschichtung (205), die auf der Oberflächenbeschichtung angeordnet ist und ein wärmedämmendes und elektrisch leitendes Material umfasst, wobei die Schutzbeschichtung (205) die elektrisch leitenden Elemente (204) teilweise bedeckt.

2. Vorrichtung nach Anspruch 1, **dadurch gekennzeichnet, dass** die elektrisch leitenden Elemente (204) Metallstreifen mit wenigstens einer aus der Schutzbeschichtung herausragenden Kante (2040) umfassen.

3. Vorrichtung nach Anspruch 2, **dadurch gekennzeichnet, dass** die Metallstreifen einen dreieckigen Querschnitt aufweisen.

4. Vorrichtung nach einem der Ansprüche 1 bis 3, **dadurch gekennzeichnet, dass** wenigstens ein Teil der elektrisch leitenden Elemente (204) untereinander verbunden sind.

5. Blitzanfällige Struktur (100), die dazu bestimmt ist, in Hochtemperaturumgebungen zu arbeiten, **dadurch gekennzeichnet, dass** wenigstens ein Teil der Struktur mit einer Blitzschutzvorrichtung (200) nach einem der Ansprüche 1 bis 4 versehen ist.

6. Struktur nach Anspruch 5, **dadurch gekennzeichnet, dass** sie wenigstens eines der folgenden Triebwerkselemente bildet: eine Düse, einen Heckteil und einen Ring.

7. Verfahren zur Herstellung einer Blitzschutzvorrichtung (200) auf einer zu schützenden Struktur (100), wobei das Verfahren wenigstens umfasst:
- das Abscheiden einer Oberflächenbeschichtung, die wenigstens eine leitende Farbschicht (202) umfasst, auf der zu schützenden Struktur,
- das Befestigen einer Vielzahl von voneinander beabstandeten, elektrisch leitenden Elementen (204) auf der leitenden Farbschicht (202) der Oberflächenbeschichtung,
- das Abscheiden einer Schutzbeschichtung (205), die ein wärmedämmendes und elektrisch leitendes Material umfasst, auf der Oberflächenbeschichtung, wobei die Schutzbeschichtung (205) die elektrisch leitenden Elemente (204) teilweise bedeckt.

8. Verfahren zur Herstellung einer Blitzschutzvorrichtung (400) auf einer zu schützenden Struktur (300), wobei das Verfahren wenigstens umfasst:
- das Befestigen einer Vielzahl von voneinander beabstandeten, elektrisch leitenden Elementen (404) an der Struktur (300),
- das Abscheiden einer Oberflächenbeschichtung, die wenigstens eine leitende Farbschicht (402) umfasst, auf der zu schützenden Struktur,
- das Abscheiden einer Schutzbeschichtung (405), die ein wärmedämmendes und elektrisch leitendes Material umfasst, auf der Oberflächenbeschichtung, wobei die Schutzbeschichtung (405) die elektrisch leitenden Elemente (404) teilweise bedeckt.

9. Verfahren nach Anspruch 7 oder 8, **dadurch gekennzeichnet, dass** es das Befestigen von Metallstreifen an der leitenden Farbschicht (202) oder an der Struktur (300) umfasst, um die elektrisch leitenden Elemente (204; 404) zu bilden, wobei die Metallstreifen wenigstens eine sich oberhalb der Schutzbeschichtung (205; 405) erstreckende Kante (2040, 4040) umfassen.

10. Verfahren nach Anspruch 9, **dadurch gekennzeichnet, dass** die Metallstreifen einen dreieckigen Querschnitt aufweisen.

11. Verfahren nach einem der Ansprüche 7 bis 10, **dadurch gekennzeichnet, dass** es ferner das Verbinden wenigstens eines Teils der elektrisch leitenden Elemente (204; 404) untereinander umfasst.

## Claims

1. A lightning protector device (200) for laying on a structure (100) that is to be protected, said device comprising at least:
• a surface coating comprising at least one conductive paint layer (202);
• a plurality of electrically conductive elements (204) arranged in spaced-apart manner on the structure, said elements being in contact with the conductive paint layer (202);
• a protective coating (205) arranged on the surface coating and comprising a material that is thermally insulating and electrically conductive, the protective coating (205) covering the electrically conductive elements (204) in part.

2. A device according to claim 1, **characterized in that** the electrically conductive elements (204) comprise metal strips each including at least one edge (2040) projecting beyond the protective coating.

3. A device according to claim 2, **characterized in that** the metal strips present a section that is triangular.

4. A device according to any one of claims 1 to 3, **characterized in that** at least some of the electrically conductive elements (204) are interconnected.

5. A structure (100) that is sensitive to lightning and that is to operate in high temperature environments, said structure being **characterized in that** at least a portion thereof is provided with a lightning protector device (200) according to any one of claims 1 to 4.

6. A structure according to claim 5, **characterized in that** it constitutes at least one of the following elements of a thruster: a nozzle; an after-body; and a shroud.

7. A method of making a lightning protector device (200) on a structure (100) that is to be protected, said method comprising at least:
• depositing a surface coating on the structure that is to be protected, the coating comprising at least one conductive paint layer (202);
• fastening a plurality of spaced-apart electrically conductive elements (204) on the conductive paint layer (202) of the surface coating;
• depositing a protective coating (205) on the surface coating, the protective coating comprising a material that is thermally insulating and electrically conductive, the protective coating (205) covering the electrically conductive elements (204) in part.

8. A method of making a lightning protector device (300) on a structure (400) that is to be protected, said method comprising at least:
• fastening a plurality of spaced-apart electrically conductive elements (404) on the structure (300);
• depositing a surface coating on the structure that is to be protected, the coating comprising at least one conductive paint layer (402);
• depositing a protective coating (405) on the surface coating, the protective coating comprising a material that is thermally insulating and electrically conductive, the protective coating (405) covering the electrically conductive elements (404) in part.

9. A method according to claim 7 or claim 8, **characterized in that** it includes fastening metal strips on the conductive paint layer (202) or on the structure (300) so as to form said electrically conductive elements (204; 404), each metal strip including at least one edge (2040, 4040) extending above the protective coating (205; 405).

10. A method according to claim 9, **characterized in that** each metal strip presents a section that is triangular.

11. A method according to any one of claims 7 to 10, **characterized in that** it further includes connecting together at least some of the electrically conductive elements (204; 404).
